# EUROPEAN PATENT SPECIFICATION

(11) **EP 2 553 519 B1**
(45) Date of publication and mention of the grant of the patent: **07.02.2018**
(21) Application number: 11720865.2
(22) Date of filing: 30.03.2011
(51) Int. Cl.: G02C 5/22

(54) **ELASTIC HINGE FOR SPECTACLES**
ELASTISCHE SCHARNIERE FÜR BRILLEN
CHARNIÈRE ELASTIQUE POUR PAIR DE LUNETTES

(30) Priority: 30.03.2010 IT MI20100530
(43) Date of publication of application: 06.02.2013
(73) Proprietor: Visottica Industrie S.p.A., 31058 Susegana (TV) (IT)
(72) Inventor: MATHIEU, François, F-39360 Larrivoire (FR); HOTELLIER, Christophe, F-39400 Morez (FR)
(74) Representative: Faggioni, Carlo Maria
(86) International application number: PCT/IB2011/051354
(87) International publication number: WO 2011/121554

(56) References cited:
- EP-A1- 0 572 703
- EP-A1- 2 023 184
- EP-A2- 0 426 947
- WO-A1-2009/132809
- FR-A1- 2 741 459

## Description

### FIELD OF THE INVENTION

The present invention concerns a hinge for spectacles, in particular a so-called flexible hinge.

### BACKGROUND ART

As known, spectacle hinges consist of a series of elements and mechanisms which allow to mount the two temple bars on the front frame of the spectacles in an articulated manner.

The spectacle hinges take on a remarkable variety of shapes, both according to their function, and to the aesthetic appearance they must impart to the spectacles. Among today's most used hinges there are so-called flexible hinges.

Flexible hinges normally consist of a box-shaped housing, mounted on each temple bar, within which a slider or carriage provided with a protruding eyelet portion is slidable, intended to couple - through an articulation pin - with a female fork provided on the endpiece or on the front frame of the spectacles. The alternate sliding movement of the carriage in the box housing is opposed by an elastic element, normally shaped as one or two helical springs, which imparts the so-called flexible movement.

Examples of conventional flexible hinges are disclosed in EP1175638 or FR2662516 in the name of the same Applicant. In these hinges the helical spring is fitted on a cylindrical pin of the carriage. The pin, on the one hand, supports the helical spring in the correct working position and, on the other hand, represents the distal end constraint of the helical spring (i.e. the end closest to the bottom of the box housing). The other end of the spring, i.e. the proximal end, is instead constrained to the fixed box housing through a retaining clip. Thereby, the sliding movement of the carriage causes a compression of the spring (constrained on one side to the fixed box body and on the other side to the movable end of the carriage) which hence imparts the desired elastic reaction.

According to the known art, also hinges wherein the helical spring is not fitted on an elongated pin, but is rather contained within a cavity of the carriage body have already been proposed. Examples of such hinges are disclosed in FR2741459, EP426947 or International application WO2010041199. WO2009132809 discloses a flexible hinge for spectacles having a generally U-shaped carriage. EP2023184 also discloses a spring hinge having an U-shaped slide wherein an helical spring is inserted between two arms thereof. Other known spring hinges are disclosed in EP572703 and FR2938350.

These hinges are highly effective and do not require the presence of the weak support pin. However, they require a proper sizing in order to obtain good guiding of the carriage in its housing and a sufficient torsional/bending strength, however, without implying excessive bulk. In particular, in the cases in which the carriage is obtained as a U-bent element (for example FR2741459), the two side legs of the U carriage must be sufficiently tall and distant from each other so as to provide the system with stiffness, especially torsional one. Moreover, in these prior-art solutions the overall lateral bulk is given by the width of the helical spring in addition to the entire thickness of the two side walls of the legs of the U profile. Again, the longitudinal guiding of the carriage is ensured solely by the engagement between the edges of the U profile and the inner surfaces of the housing body, which would force to machine the components with a very small tolerance to avoid undesired plays between carriage and housing body. From a practical point of view, also for economic reasons, it has been noticed that acceptable tolerances nevertheless leave a certain torsional clearance of the carriage in the housing body, especially when the carriage is withdrawn to its maximum extension.

In the cases in which the carriage body is solid and simply has a cavity for housing the spring (as in PCT/IB2009/054376, for example), the carriage body is also massive.

Moreover, in both cases the spring is housed in the carriage with a wide gap and is constrained solely along two opposite diameter lines (where it rests against the inner surface of the carriage). The spring hence tends to move transversally during the compression and extension phases, which causes wear or a non-linear elastic behaviour.

### SUMMARY OF THE INVENTION

The object of the present invention is hence to overcome the above-mentioned problems, providing a high-strength flexible hinge, wherein the elastic element is freely housed in a cavity defined by the carriage, which offers a safe guide both for the spring and for the carriage (especially with respect to the torsional forces) and which requires the smallest possible use of material, hence also resulting in inexpensiveness.

Such object is achieved through a hinge device having the features mentioned in claim 1; further interesting features are mentioned in the dependent claims.

In particular, a flexible hinge for spectacles is provided, comprising a female component articulated with a male component, said latter one having at least one housing body, forming a sliding cavity, and a carriage sliding in said housing cavity, generally U-shaped and provided with two eyelet-shaped end heads defining a hinge axis, a longitudinally-arranged, elastic element being furthermore provided and constrained between a distal-end base of the carriage and retaining means which can be coupled with said sliding cavity and apt to cause an elastic reaction which contrasts the withdrawal of said carriage from the housing, wherein
the carriage is shaped according to two U-shaped structures, each one comprising two parallel bars, joined at said distal-end base of the carriage and to said two eyelet-shaped heads, said U-shaped structures being combined on the same main portion of the carriage body so as to arrange said parallel bars along four angular, longitudinal edges of the carriage and thereby forming longitudinally-elongated side, upper and lower openings.

According to a preferred aspect, said pairs of bars lie on planes mutually rotated - on the longitudinal axis of the carriage - by an angle ranging in the interval 50-90°.

According to another aspect, said bars have a rectangular cross-section profile, with the inner side oriented perpendicularly to the radial axis coming out of the longitudinal axis of the carriage, such inner side acting as containment surface for said longitudinal elastic element. Preferably, said bars have a rectangular cross-section profile, with the homologous sides having the same orientation. According to a further aspect, the bars have a bevel along a corner facing the longitudinal axis of the carriage, said bevel acting as containment surface for said longitudinal elastic element.

According to a further aspect of the invention, the sliding cavity of the housing is shaped as a cylindrical hole wherein four longitudinal grooves are obtained, into which said parallel bars of the U-shaped structures are slidably introduced. According to a different aspect, said sliding cavity of the housing has a rectangular section, at the vertexes of which said parallel bars of the U-shaped structures are intended to slide, bearing on two adjacent sides.

Preferably, the cross-section area of each bar of the two U-shaped structures is smaller than 0.18-0.22 mm², preferably smaller than 0.20 mm².

According to another aspect, the retaining means comprise side protrusions intended to engage with a guiding function with said side openings. Preferably, said side protrusions have bevelled front edges apt to couple with corresponding bevelled front edges of said longitudinal openings, said bevelling being inclined so as to determine a wedge effect with a stress component of said elastic element directed towards the longitudinal axis of said carriage.

According to once another aspect, inward protrusions are furthermore provided, in correspondence of the distal end portion of said carriage, apt to represent abutment elements for the distal end of said elastic means. Said protrusions are preferably obtained by deformation of the carriage material.

According to a peculiar aspect of the invention, the extension of said elongated, longitudinal openings is at least equal to the length of the elastic means and the height of the openings is such as to define four longitudinal bearing lines for said elastic means radially set apart by at least 15°, preferably by at least 40°.

A manufacturing method of a hinge as described above is provided, wherein said carriage is obtained by folding into a U shape a metal sheet, wherein two wide cut-outs are further practised on the opposite arms of said U-shaped carriage so as to define four thin bars along four longitudinal edges of said carriage, said bars having a rectangular crosswise section with an area smaller than 0.18-0.22 mm², preferably smaller than 0.20 mm².

### BRIEF DESCRIPTION OF THE DRAWINGS

Further features and advantages of the device according to the invention will in any case be more evident from the following detailed description, given by way of example and illustrated in the attached drawings, wherein:
fig. 1 is an elevation view of the two elements making up the hinge according to the invention, and precisely the fixed body, with the elongated housing forming sliding cavity, and the sliding carriage provided with spring means, respectively;
figs. 2A and 2B are perspective views of the full carriage and of the carriage sectioned half-way through its length, respectively;
fig. 3 is a section view according to the line III-III of fig. 1;
fig. 4A shows the hinging end of the assembly consisting of fixed body and sliding carriage, equally sectioned according to line III-III of fig. 1, of which
fig. 4B shows, in an enlarged scale, the detail C of fig. 4A;
fig. 5 is a side elevation view of a hinge assembled on the spectacles, according to another embodiment;
fig. 6 is a section view according to the line VII-VII of fig. 5;
figs. 7A and 7B are perspective and interrupted section views, respectively, fully similar to the ones of figs. 2A and 2B, respectively, concerning the embodiment of fig. 5;
fig. 8A is a perspective view, partly sectioned in a way similar to the view of fig. 4A, concerning the hinge variant illustrated in figs. 5 to 7;
fig. 8B shows, in an enlarged scale, the detail A of fig. 8A;
figs. 9A-9D show, in a perspective view, further possible embodiments of elastic clips according to the invention;
fig. 10 is a perspective view of a further embodiment of the hinge component according to the invention, of which
fig. 11 represents a crosswise section;
fig. 12 is a top plan view of the hinge component of fig. 11, of which
fig. 13 represents the longitudinal section according to line E-E;
fig. 14 is a view similar to the one of fig. 11 with the carriage withdrawn from its respective housing;
fig. 15 is an elevation side view of the carriage according to the embodiment of fig. 11;
fig. 16 is a top plan view, partly in section, of the carriage of fig. 15;
fig. 17 is an enlarged view of the detail enclosed in the circle A of fig. 16;
fig. 18 is a perspective rear view of the carriage of fig. 15;
fig. 19 is an enlarged view of the detail enclosed in the circle B of fig. 18;
figs. 20A-20E are side elevation, top plan, front elevation, front perspective, and rear perspective views, respectively, of a rigid clip to be used on the hinge of fig. 11;
fig. 21A is a perspective view illustrating a first disassembling phase of the hinge of fig. 11, of which
fig. 21B is a longitudinal-section view; and
fig. 22A is a perspective view which illustrates a second disassembling phase of the hinge of fig. 11, of which
fig. 22B is a longitudinal section view.

### DETAILED DESCRIPTION OF PREFERRED EMBODIMENTS

Along the present description, reference will be substantially made to one only of the two components making up a spectacle hinge and precisely the component which is conventionally referred to as the "male" one, consisting of the cited fixed housing assembly, provided with an elongated sliding cavity, and with the relative carriage, sliding in said housing.

More precisely, and as appears also in the prior art, fixed body 1 is a box element, the elongated cavity 1a of which has a shape suited to contain with minimal slack a carriage body 2, so as to allow longitudinal precision sliding thereof. This cavity 1a is closed at its distal end 1b, while it is open at its proximal end 1c, to allow the introduction and the withdrawal of carriage 2.

This carriage 2 has a main portion 2a intended to be housed in the cavity 1a of box body 1, guided in its sliding by the inner walls of cavity 1a, from which proximal ends 2b project, intended to lie outside housing 1, shaped as terminals with eyelets, having coaxial holes, with which a hinge articulation pin 3 engages (shown only in drawings 5 and 8A).

In particular, the proximal ends are two identical eyelet-shaped heads.

Within the main portion of carriage 2 there is housed an elastic element, generally consisting of a spiral spring 4, the longitudinal axis of which coincides with the longitudinal axis of carriage 2. With one of its ends, spring 4 abuts on the end or distal base of carriage 1, while with the other end it abuts on retaining means (better described in the following) which may engage with cavity 1a.

The "elastic" component of the hinge (usually referred to as the male component of the hinge) - consisting of box housing body 1 and of the carriage 2 inserted therein - is intended to be securely fastened to one of the mutually moving elements of the spectacles, typically to the temple bar, while the opposite component - essentially consisting of a fork (usually referred to as the female component of the hinge) - is integral with the terminal end or frontpiece of the spectacle frame.

Such convention will be used for greater clarity also in the following, but it is understood that the inventive principles set forth here may apply also to the case of an elastic component integral with the front frame of the spectacles, while the opposite component is integral with the temple bar of the spectacles.

According to the invention, the main body of carriage 2 is substantially shaped as two mutually-connected, structural U-shaped elements, the thin arms of which are arranged along respective longitudinal corner edges at the four vertexes of the figure which defines the section bulk of the carriage. In substance, the four arms of which the two U-shaped structures consist of are arranged along four longitudinal directrixes arranged on peripheral areas of the carriage, at a distance from one another. Thereby, an excellent moment of inertia is provided, proportionally to the section size of the arms, with minimum use of material; this design is also the one which ensures the most effective sliding guide with respect to corresponding guide walls of cavity 1a.

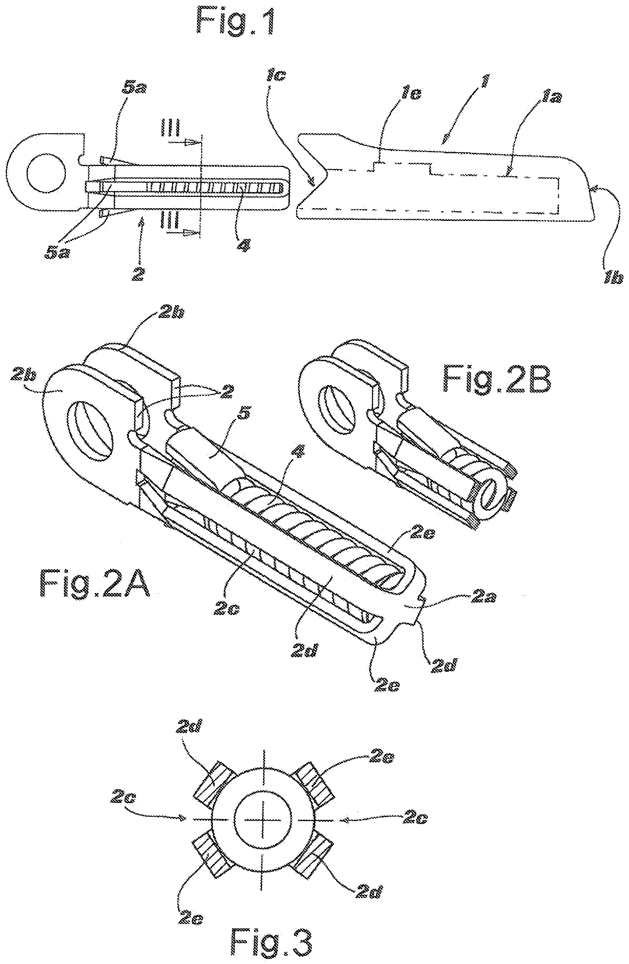

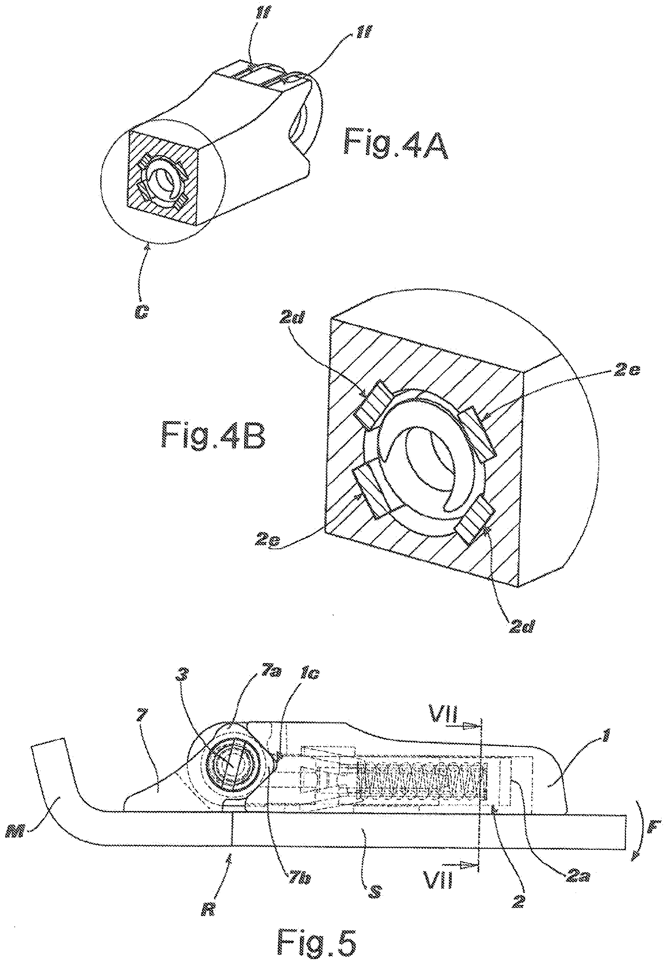

More in particular, according to a first embodiment of the invention, two U-shaped elements 2d and 2e overlap mutually rotated - about the longitudinal axis - by a few degrees, for example by 50°-80°; in other words, the pairs of arms of the respective U-shaped, structural elements lie on planes mutually rotated - about the longitudinal axis - by an angle ranging between 50°-80°. Therefore, the arms of the U-shaped elements form mutually parallel bars arranged along four directrixes which fall on edges at the vertexes (seen in cross-section) of carriage body 2, as can be appreciated in fig. 2B and fig. 4B.

The section shape of bars 2d and 2e is preferably rectangular, with equal sides (square) or different sides. According to the preferred embodiment illustrated in figs. 1-8A, the section of the bars is rectangular with one of the sides (preferably the wider one) oriented perpendicularly to the radial axis coming out of the longitudinal axis of the carriage. Exemplifyingly, the bars have a rectangular section of 4mm x 0.16 mm, therefore with an area of each bar in section of the order of 0.64 mm² and at most of 0,80 mm².

The relative distance between bars 2e and 2d, seen in section (fig. 2B or 4B for example), causes wide openings or longitudinally elongated cut-outs both at the two sides of the carriage and above and below. In particular, it must be noticed that the length of the openings is at least equal to the length of elastic means or spring means 4 (in mounted condition on the carriage) and the height is such as to define four longitudinal bearing lines for spring 4 (as will be better highlighted further on) mutually radially spread apart by at least 15°, preferably by at least 40°.

The two U-shaped structures are joined in a coplanar way in the area of the distal end base 2a of the carriage and join with connecting portions to the eyelet heads 2b.

In order to manufacture inexpensively such a shape of the carriage body one can start from a conventional carriage of metal sheet bent in a U shape, in which two longitudinal, opposite cuts 2c are practised, apt to define two pairs of opposite bars. After having practised said longitudinal cut, each of the bars is subjected to twisting, around its median axis, so as to arrange them in the way shown in fig. 3, i.e. with the wider sides of their respective section profiles perpendicular to the radial lines coming out of the longitudinal axis of the carriage or, in other words, so that their inner surfaces be tangential to a circle inscribed therein.

Thereby, between bars 2d and 2e a cylindrical spring 4 can be housed and well contained, which ends up bearing tangentially on the four sides/corners of the four bars, i.e. along four parallel and diametrically opposite lines (with the mutual radial distances indicated above).

Through this arrangement the retaining of spring 4 in its correct axial position is guaranteed, without the risk of buckling under compression stresses deriving from the oscillation of the flexible hinge, as better described in the following.

With this manufacturing method, U-shaped carriage 2 may be obtained by cold moulding or shearing from a sheet of suitable metal material, for example nickel silver, Monel metal or stainless steel. For such reason, the carriage has an inherent sturdiness and can be manufactured in a large amount of pieces in little time and inexpensively.

According to a preferred configuration, and as better shown in drawings 4A and 4B, the housing cavity 1a in box body 1 is obtained as cylindrical hole and then provided with axial grooves or millings 1d - four in number, i.e. equal to the number of bars 2d, 2e - the size of which substantially correspond to the crosswise section of the bars; therefore, when carriage body 2 is introduced into cavity 1a, each of bars 2d, 2e slidingly engages with one of said axial grooves 1d. A precision guide of carriage 2 is thereby accomplished, upon its introduction into body 1, but at the same time an accurate retaining is obtained - without slack and without opportunities for mutual rotation - of carriage 2 within body 1.

As already mentioned above, spring 4 is retained in a longitudinal direction between the distal end base portion 2a of carriage 2 and a retaining element 5, briefly called clip, intended to securely engage with the inner cavity of the box body in the proximity of the exit mouth/opening.

This retaining clip 5 may take on a four-footed shape, i.e. with four distinct projections 5a, mutually oriented at 90° (fig. 1), projecting from a contrast base which abuts against the end of spring 4. According to an advantageous aspect of the present invention, the four projections briefly project through the side cut-outs 2c and from the upper and lower openings of the carriage; the two side projections, engaging with cut-outs 2c, substantially provide a longitudinal and torsional guide function between clip 5 and carriage 2; the two upper and lower flexible projections come out from the upper and lower openings of the carriage and are mainly intended to engage with corresponding seats 1e of cavity 1a, in which they snap lock themselves according to a method known per se in the field. The flexibility of projections 5a allows them to partly close back on themselves and allow the introduction of carriage 2 into cavity 1a, despite the fact that at least the upper and lower projections come out from the carriage contour (as clearly visible in fig. 1) to be able to engage with the seats 1e of cavity 1a.

Also the two upper and lower projections may have a guide function along the upper and lower cut-outs.

However, it is not ruled out that the clip may be rotated by 90° with respect to what has just been illustrated.

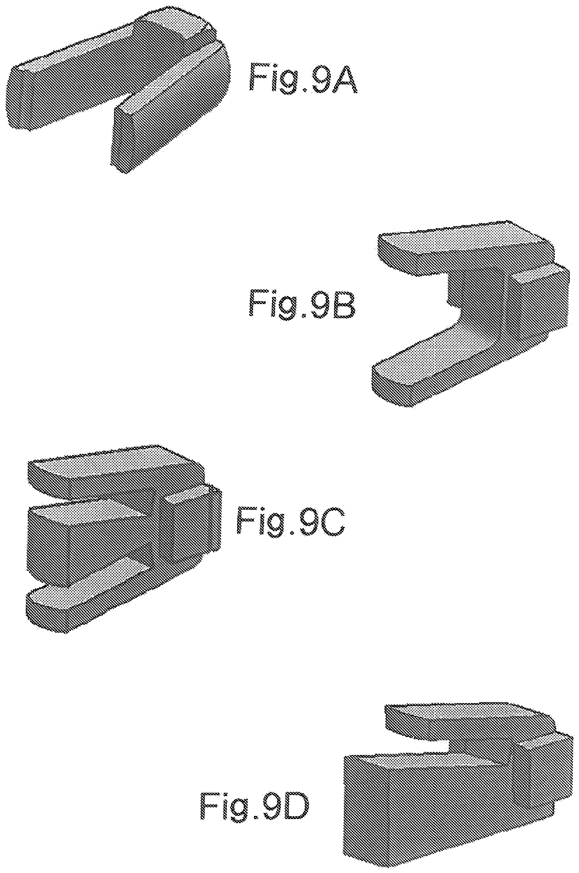

In figs. 9A-9D alternative embodiments of clip 5 are shown. In particular, fig. 9A shows a clip provided with only two flexible side projections, intended to engage with corresponding side seats of housing 1, and an upper protuberance to be guided in the upper cut-out between two upper bars of carriage 2. Fig. 9B shows a clip provided with two upper and lower flexible projections, in addition to two short side protuberances engaging with the side openings 2c of the carriage. Fig. 9C shows a clip similar to the one of fig. 9B, however, obtained through a different construction process. Fig. 9D shows a clip similar to the one of fig. 9C, but without the lower flexile projection.

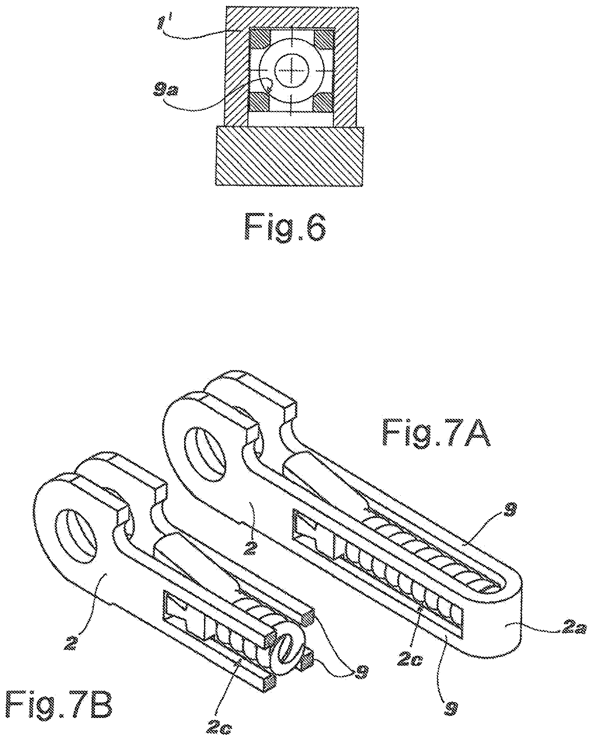

Figs. 7A-8A show a second embodiment of the hinge according to the invention. In this case, the carriage is shaped again according to a pair of thin U-shaped structural elements, wherein the four mutually parallel arms or bars 9 arranged - seen in their crosswise section - at the vertexes of a rectangular quadrilateral.

In terms of manufacturing, the U-bent metal plate of the carriage is provided with longitudinal cut-outs 2c - practised in the walls of the two side arms - so as to form four parallel bars 9 having a substantially square section, without then subjecting them to any twisting.

The inner and outer surfaces of bars 9 are preferably mutually parallel, according to mutually perpendicular planes; that is, all the homologous sides of the bars have the same orientation. Thereby carriage body 2 may be manufactured at an even lower cost, since the twisting operation mentioned for the first embodiment is not carried out.

Although in this embodiment the bar section is referred to as square, it is not ruled out that it may be also generally rectangular with different sides.

The section area of each bar, also in this case is kept below 0.20 mm².

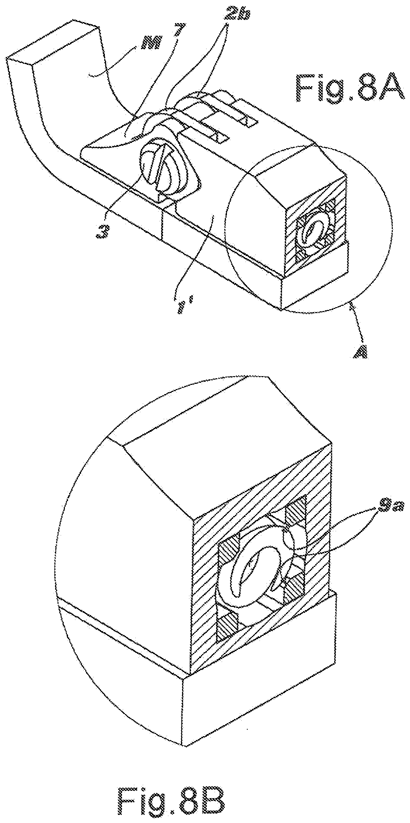

According to this arrangement, as better shown in figs. 6 and 8B, the housing cavity is not cylindrical, but rather essentially rectangular or precisely square; therefore, when the carriage body 2 is introduced into the cavity of housing 1', each one of bars 9 abuts, bearing on two perpendicular sides, in one of the four corners of said cavity. A precise guide of carriage 2 is thereby accomplished, upon the introduction thereof into the housing of body 1, but at the same time an accurate retaining is obtained - with no slack and no opportunity for mutual rotation - of carriage 2 within body 1.

Preferably, in order to obtain that these bars 9 perform even more effectively their function of retaining spring 4, they are preferably provided with a bevel 9a on their inward longitudinal edge, i.e. facing spring 4 (as it appears clearly in figures 6 and 8B). This bevel 9a, which accomplishes a surface substantially perpendicular to the radial direction and hence tangential to the circular contour of spring 4, may have a relatively modest crosswise dimension, for example equal to 1/3 of the crosswise dimension of the bar.

Spring 4 is intended to rest tangentially on the four bevels 9a, so as to be contained with respect to possible crosswise movements.

Finally, as can be noticed in fig. 1, the mouth of box housing 1 is preferably V-shaped, according to a design known per se. This configuration, together with the fact that the double eyelet-shaped head 2b is apt to engage with a corresponding pair of slits 1f in the mouth of box body 1 (fig. 4A), ensures excellent resistance of the hinge to twisting.

In the drawings of figures 5 and 8A one can see both the male component of the hinge - consisting of body 1 and carriage 2, assembled - which, as already stated, is normally intended to be mounted on the temple bar S of the spectacles, and the female component - consisting of fork 7 - which, as already stated, is normally intended to be mounted on the endpiece M of the frontpiece or of the frame of the spectacles lenses.

These two components are mounted one on the other free to rotate, through a pin or screw 3, which has already been mentioned, which runs though the holes of the eyelets on the terminals 2b of the carriage and corresponding eyelets provided in the three-pronged fork 7. This fork 7 is nothing but a bracket, with suitably cam-shaped prongs or wings, which is welded or otherwise fastened to endpiece M of the spectacles.

The cam shaping in turn simply consists of a pair of humps 7a and 7b, angularly offset one with respect to the other by about 90°. As known, these two humps are intended to cooperate with the V-shaped profile of the proximal end 1c of body 1, to keep temple bar S steadily in its fully open or fully closed position, respectively.

During the flexible operation of the hinge, when a pressure is imparted on temple bar S in the direction of arrow F (in the direction of excessive opening), the same rotates around a fulcrum point R, consisting of the bearing area of the proximal end of temple bar S on the corresponding end of endpiece M. By doing so, the housing 1 moves away from pin 3, causing a traction which tends to withdraw carriage 2 (constrained to pin 3).

However, since clip 5 is locked within said housing 1, due to the engagement of the projection 5a thereof with groove 1e, there derives that spring 4 is progressively compressed between the distal end 2a of carriage 2 and clip 5, providing the desired elastic reaction.

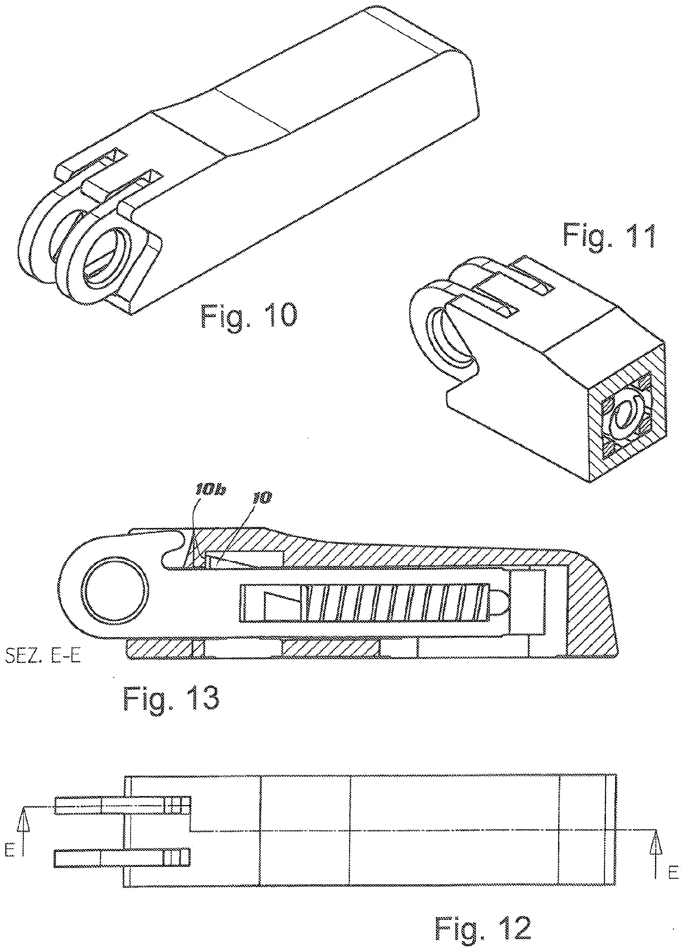

Figs. 10-22B show a further embodiment of the hinge according to the invention. In this case, in particular, the clip intended to lock the proximal end of the elastic element with respect to the housing is rigid, i.e. it does not have elastic projections.

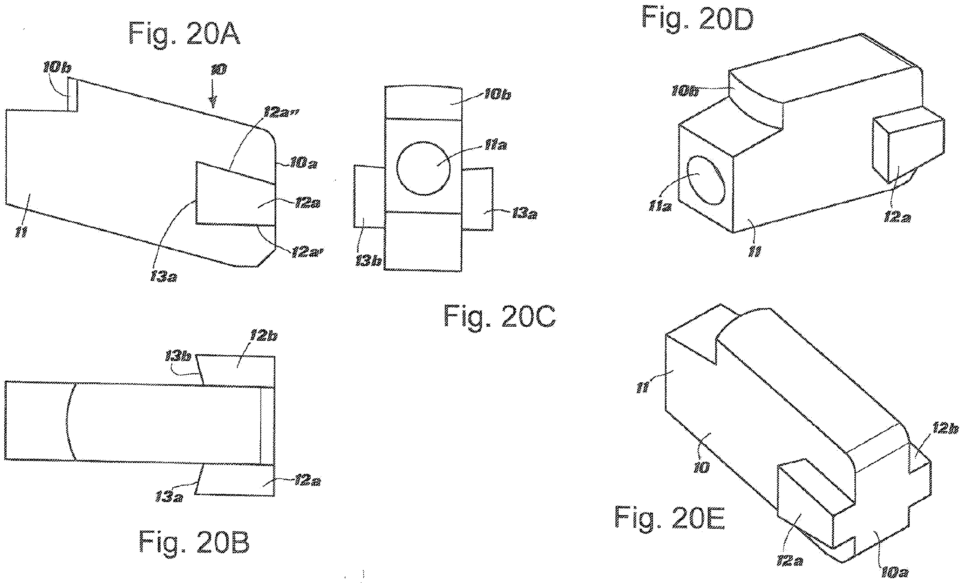

As shown in figs. 20A-20E, a clip 10 consists of a rigid body, typically made of metal, provided with two opposite abutment surfaces 10a and 10b, substantially mutually parallel, the surface centres of which fall at two different heights. In particular, the surface centre of rear surface 10a is intended to be arranged substantially on the longitudinal axis of elastic element 4; the surface centre of front surface 10b is intended to be arranged in correspondence of an abutment shoulder 1r obtained in recess 1e in the upper portion of the cavity of housing 1.

Clip body 10 furthermore has two upper and lower edges inclined with respect to the two opposite abutment surfaces 10a and 10b, to meet the function which is illustrated in the following.

Body 10 extends towards the front side with a prong portion 11 wherein a longitudinal hole or front recess 11a is practised, the usefulness of which will be illustrated in the following.

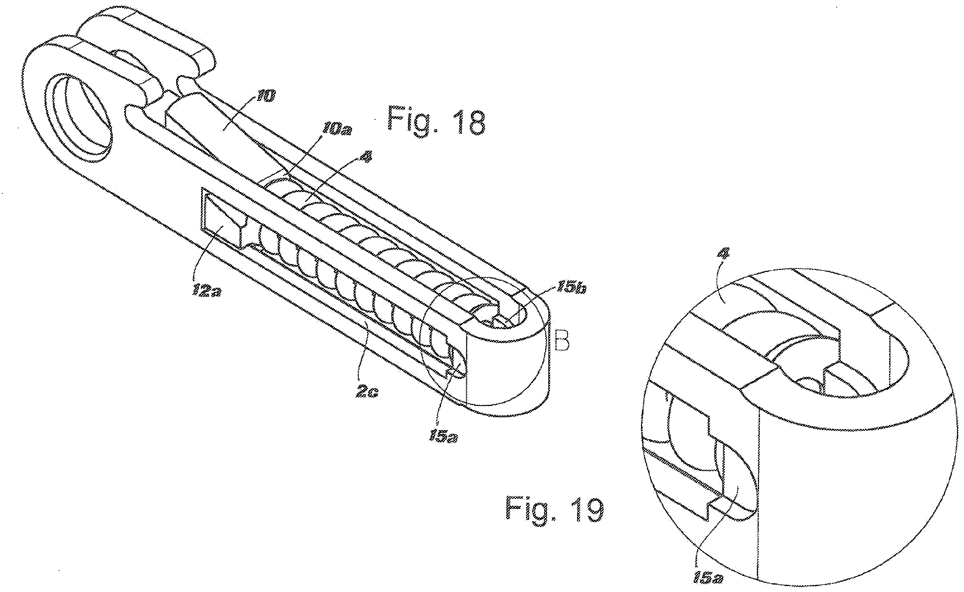

In the rear portion of body 10 there are furthermore provided two side protrusions 12a and 12b which have the same function as the side projections described above for clip 5; i.e. the two side protrusions 12a and 12b are intended to engage with the side openings or cut-outs 2c (see fig. 18), substantially providing a longitudinal and torsional guide function between clip 10 and carriage 2. As clearly shown in fig. 20A, each protrusion 12a, 12b has at least one lower guide side 12a' - aligned according to the carriage sliding axis and intended to slide on the inner edge of openings 2c - and an upper side 12a" inclined with respect to the lower one 12a' to allow a rotation of body 10 (as can be seen further on), which design imparts the protrusion a characteristic shape as a rectangular trapetium.

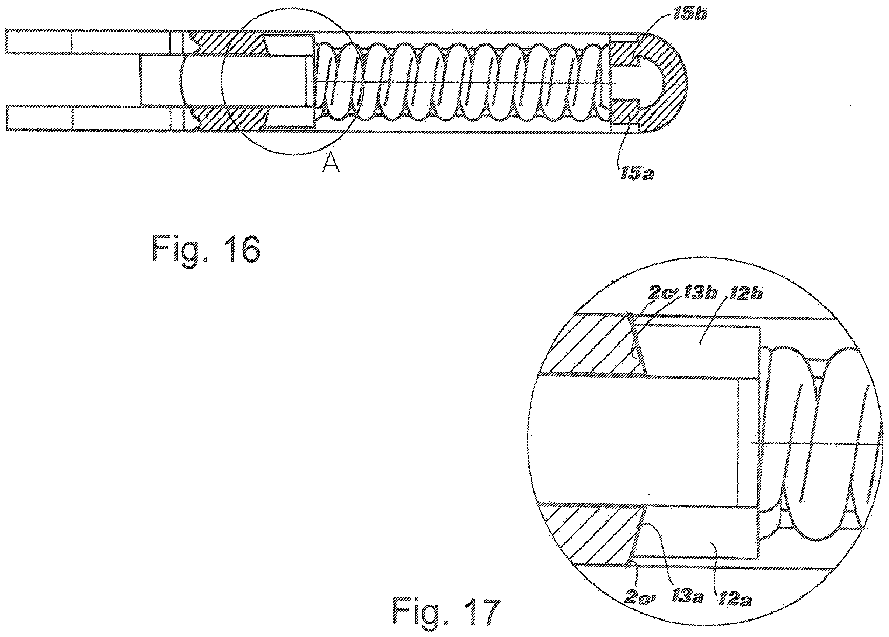

Moreover, as clearly visible in fig. 20B, the front edge of such protrusions 12a and 12b is advantageously shaped inclined towards the inside, i.e. according to a plane converging towards the longitudinal sliding axis of the hinge inclined backwards. These two inclined edges are intended to engage with corresponding front end edges of side openings 2c, inclined in the same way (see figs. 16 and 17). Such coupling method produces an advantageous effect of preventing an opening wide of the two arms of the U-shaped carriage. As a matter of fact, the bias action of spring 4 - in the inactive phase of the hinge - pushes the two protrusions 12a and 12b towards the corresponding inclined front edges of side openings 2c, causing a wedge effect which tends to bring closer together the two arms of the U-shaped carriage, which are thus brought to adhere to the same body 10 with a greater overall rigidity and greater accuracy and sliding guide.

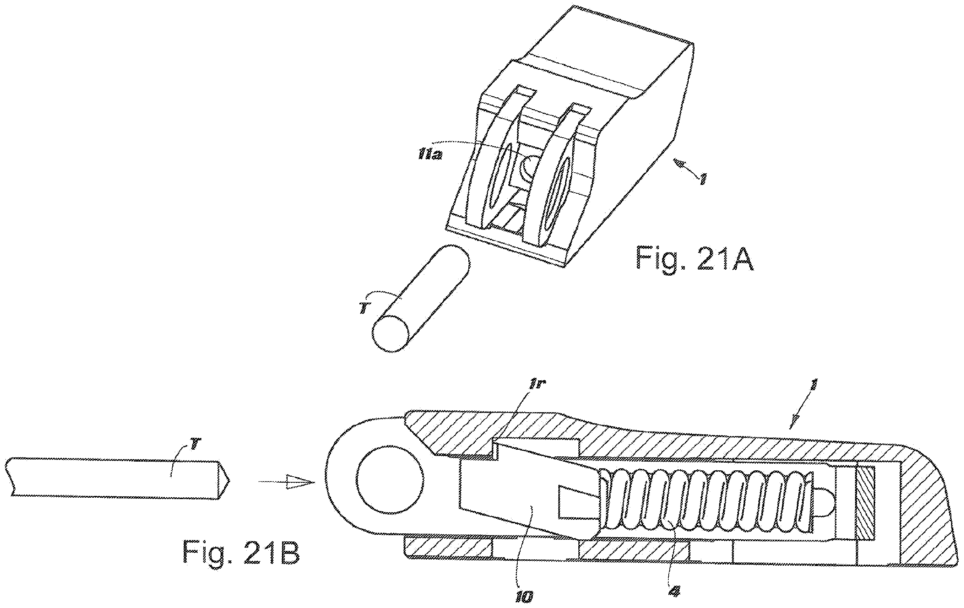

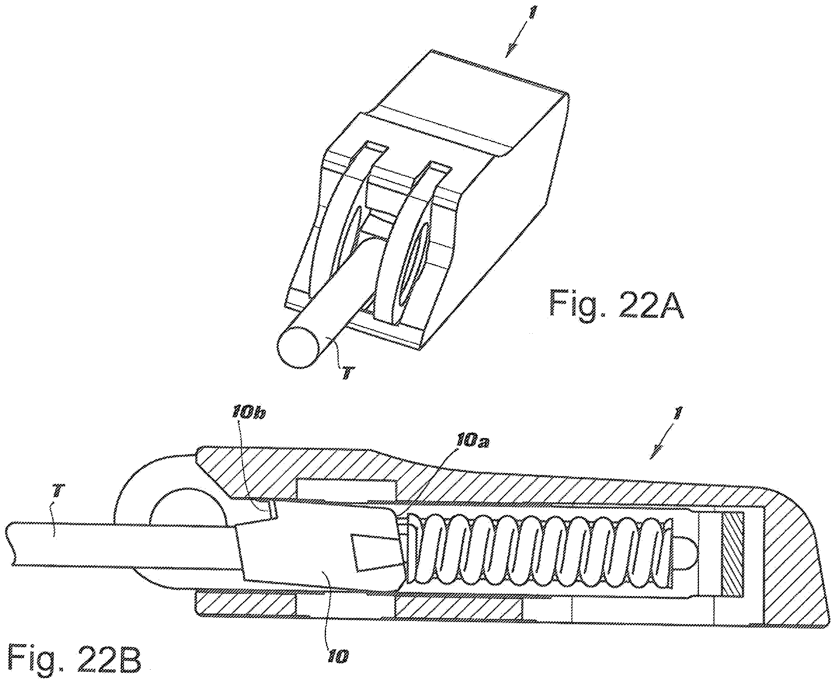

Rigid clip 10, since it does not have flexible portions which allow the elastic insertion thereof into the cavity of housing 1, is intended to rigidly rotate to be introduced into and then locked inside the housing. Due to the shape of body 10, the clip can be laid as shown in fig. 22B, for the introduction into housing 1, and then raised up, as shown in fig. 21B, to abut against shoulder 1r and remain locked there by the bias action of spring 4. The operation principle of the introduction and locking of the rigid clip is known per se from US4991258 and hence will not be further described here.

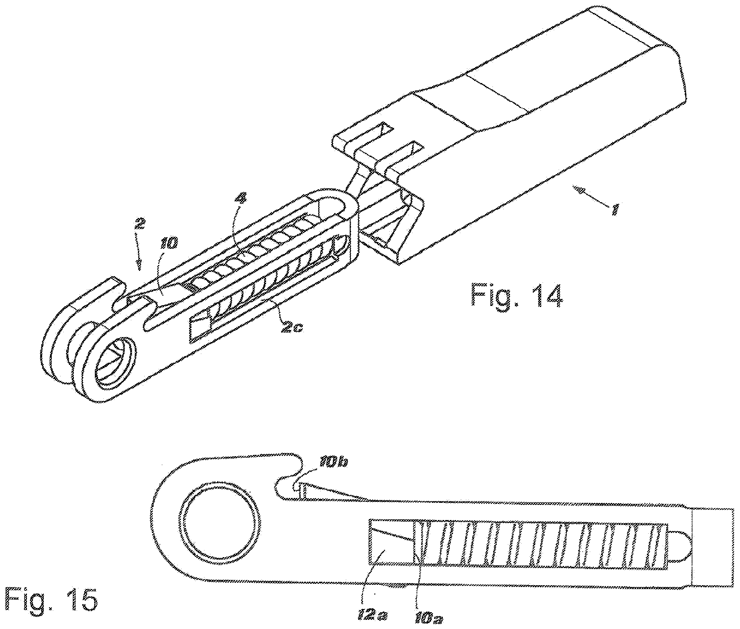

Advantageously, due to the presence of recess 11a on the front edge of clip 10, it is possible to act with a tool T, as illustrated in figs. 21A-22B, also to push the clip towards the bottom of housing 1, freeing it from shoulder 1r, laying it and hence removing it, which allows also a removal of the carriage from the housing. The trapetium shape of the side protrusions 12a and 12b leaves a sufficient upper slack between them and the side openings 2c of the carriage (fig. 15), thus allowing the desired rotation of body 10. For such purpose, advantageously, the inclination of upper surfaces 12a" and 12b" is equivalent to the one of the upper edge of body 10: thereby, with body 10 laid down (fig. 22B) in the removal condition, the upper surfaces 12a" and 12b" of side protrusions 12a and 12b arrange themselves substantially parallel to the upper inner edge of side openings 2c, easing a keeping of the position of body 10 during the introduction/withdrawal of the carriage from the housing.

According to a further preferred variant of the invention, in correspondence of the bottom portion of carriage 2, there are provided two opposite protrusions or bosses 15a and 15b, facing inward, intended to build an abutment portion for the distal end of spring 4. In particular, bosses 15a and 15b define two small opposite abutment surfaces, perpendicular to the longitudinal axis of spring 4. This promotes a correct support of the distal end of spring 4 on the bottom portion of carriage 2, avoiding that the spring coils wedge themselves into the naturally curve surface of the U-shaped end portion of the carriage, which would partly impair the operation and duration thereof.

Preferably, the two bosses 15a and 15b are obtained by plastic deformation of the carriage material, in a position adjacent to the rear end of side openings 2c.

It is understood that the above described rigid clip or the technique of providing inner protrusions in the rear portion of the U-shaped carriage can be used also on the other carriage embodiments illustrated above. In particular, also the solution of bevelling inwards the abutment edges of the side protrusions of the clip can be applied with the same benefit also to the elastic-type clips described above.

From the above-reported description the original distribution of the material making up the carriage at the four vertexes of the section shape thereof should be evident, such as to produce a high moment of inertia - and hence a good resistance to traction, bending and twisting - despite employing the smallest possible amount of material and an excellent ability of sliding guide in the box housing.

Due to the four-thin-bar configuration, arranged along the angular edges of the carriage, the section area of each bar can be maintained in the interval 0.18-0.22 mm², preferably below 0.20 mm², thereby ensuring a significant saving on raw material compared to the prior art.

The inner elastic element is suitably supported along four longitudinal support lines. Since such support lines are angularly offset (typically by 20-45°) with respect to the crosswise plane of the hinge (i.e. the plane passing through the longitudinal axis and parallel to the hinge axis defined by pin 3), the helical spring may partially extend into the side and upper openings, thereby reducing the overall crosswise bulk.

However, it is understood that the invention is not limited to the specific configurations illustrated above, which represent only non-limiting examples of the scope of the invention, but that a number of variants are possible, all within the reach of a person skilled in the field, without departing from the scope of the invention as defined in the attached claims.

For example, although the solution in which the wider side of the twisted bars acts as spring support has been illustrated as the preferred embodiment, it is not ruled out that - having sufficient radial space - the support function may be performed by the narrow side of the bars.

## Claims

1. Flexible hinge for spectacles, comprising a female component (7) mutually articulated with a male component (1, 1', 2), said latter one having at least a housing body (1), forming a sliding cavity (1a), arid a carriage (2) slidable in said housing cavity (1a), generally U-shaped and provided with two terminal eyelet-shaped heads (2b) defining a hinge axis, an elastic element (4) being furthermore provided, arranged longitudinally and constrained between a distal-end base of the carriage (2) and retaining means (5, 10) to be coupled with said sliding cavity (1a) and apt to produce an elastic reaction which opposes the withdrawal of said carriage from the housing (1, 1'), **characterised in that**
said carriage (2) is shaped according to two U-shaped structures (2e, 2d), each one comprising two parallel bars, connected in said distal-end base (2a) of the carriage and to said two eyelet-shaped heads (2b), said U-shaped structures (2e, 2d) being combined on the same main portion of the carriage body so as to arrange said parallel bars along four longitudinal corner edges of the carriage and thereby forming longitudinally-elongated, lateral, upper and lower openings (2c)
wherein the length of said longitudinal elongated openings is at least equal to the length of the elastic means (4) and the height is such as to define four longitudinal support lines for said elastic means (4) which are mutually radially set apart by at least 15°, preferably at least 40°.

2. Flexible hinge for spectacles as claimed in claim 1),
wherein said pairs of bars lie on mutually rotated planes, on the longitudinal axis of the carriage, by an angle in the range 50-90°.

3. Flexible hinge for spectacles as claimed in claim 1) or 2), wherein said bars have a rectangular-section profile, with their inner side oriented perpendicularly to the radial axis coming out of the longitudinal axis of the carriage, such inner side acting as containment surface for said longitudinal elastic element (4).

4. Flexible hinge for spectacles as claimed in claim 1) or 2), wherein said bars have a rectangular-section profile, with their homologous sides having the same orientation.

5. Flexible hinge for spectacles as claimed in claim 4),
wherein said bars have a bevel (9a) along one corner edge facing towards the longitudinal axis of the carriage, said bevel (9a) acting as containment surface for said longitudinal elastic element (4).

6. Flexible hinge for spectacles as claimed in any one of the preceding claims, wherein said sliding cavity (1a) of the housing (1) is shaped as a cylindrical hole wherein four longitudinal grooves are obtained into which said parallel bars of the U-shaped structures can be slidingly introduced (2e, 2d).

7. Flexible hinge for spectacles as claimed in any one of claims 1) to 5), wherein said Sliding cavity of the housing (1') has a rectangular section, at the vertexes of which said parallel bars of the U-shaped structures (2e, 2d) are intended to slide, bearing on two adjacent sides.

8. Flexible hinge for spectacles as claimed in any one of the preceding claims, wherein the crosswise section area of each bar of the two U-shaped structures (2e, 2d) is smaller than 0.18-0.22 mm², preferably smaller than 0.20 mm².

9. Flexible hinge for spectacles as claimed in any one of the preceding claims, wherein said retaining means (5, 10) comprise side protrusions intended to engage with a guide function with said lateral openings (2c).

10. Flexible hinge for spectacles as claimed in claim 9, wherein said side protrusions (12a, 12b) have bevelled front edges (13a, 13b) apt to couple with corresponding bevelled front edges (2c') of said longitudinal openings (2c), said bevel being apt to determine a stress component of said elastic element (4) directed perpendicularly the longitudinal axis of said carriage (2).

11. Flexible hinge for spectacles as claimed in any one of the preceding claims, wherein inward protrusions (15a, 15b) are furthermore provided, in correspondence of the distal terminal portion of -said carriage (2), apt to build abutment elements for the distal end of said elastic means (4).

12. Flexible hinge for spectacles as claimed in claim 11, wherein said protrusions (15a,' 15b) are obtained by deformation of the material of the carriage (2).

## Patentansprüche

1. Flexibles Scharnier für Brillen, das eine weibliche Komponente (7) und eine männliche Komponente (1, 1', 2) umfasst, die gegenseitig gelenkig verbunden sind, wobei die männliche Komponente zumindest einen Gehäusekörper (1) aufweist, der eine Gleitkavität (1a) formt, und einen Schlitten (2), der in der Kavität (1a) des Gehäuses gleiten kann, wobei der Schlitten im Wesentlichen U-förmig und mit zwei eine Scharnierachse definierenden ösenförmigen Anschlussköpfen (2b) ausgestattet ist, wobei ferner ein elastisches Element (4) vorgesehen ist, das longitudinal angeordnet sowie zwischen einem distalen Fußende des Schlittens (2) und Haltemitteln (5, 10) eingezwängt ist, um mit der Gleitkavität (1a) gekoppelt zu sein, und das dazu geeignet ist eine elastische Reaktion zu erzeugen, die einer Entnahme des Schlittens aus dem Gehäuse (1, 1') entgegenwirkt,
**dadurch gekennzeichnet, dass** der Schlitten (2) durch zwei U-förmige Strukturen (2e, 2d) geformt ist, die jeweils zwei parallele Stege beinhalten, die in dem distalen Fußende (2a) des Schlittens und mit den zwei ösenförmigen Köpfen (2b) verbunden sind, wobei die U-förmigen Strukturen (2e, 2d) auf dem gleichen Hauptabschnitt des Schlittenkörpers verbunden sind, um besagte parallele Stege entlang vier longitudinaler Eckkanten des Schlittens anzuordnen und dabei longitudinal erstreckende, laterale, obere und untere Öffnungen (2c) zu formen, wobei die Länge der longitudinal erstreckenden Öffnungen wenigstens gleich zu der Länge des elastischen Mittels (4) ausgebildet ist und die Höhe derart ausgebildet ist, dass vier longitudinale Stützlinien für die elastischen Mittel (4) definiert werden, die gegenseitig um wenigstens 15°, vorzugsweise wenigstens 40°, radial voneinander getrennt sind.

2. Flexibles Scharnier für Brillen nach Anspruch 1, wobei die Stegpaare in wechselseitig, um einen Winkel in einem Bereich zwischen 50° und 90°, zur longitudinalen Achse des Schlittens gedrehten Ebenen liegen.

3. Flexibles Scharnier für Brillen nach Anspruch 1 oder 2, wobei die Stege einen rechteckigen Profilquerschnitt haben, wobei deren Innenseite senkrecht zu der Radialachse ausgerichtet ist, die aus der longitudinalen Achse des Schlittens herauskommt, wobei eine solche Innenseite als Einschlussfläche für das longitudinale elastische Element (4) wirkt.

4. Flexibles Scharnier für Brillen nach Anspruch 1 oder 2, wobei die Stege einen rechteckigen Profilquerschnitt haben, wobei deren sich entsprechende Seiten die gleiche Orientierung haben.

5. Flexibles Scharnier für Brillen nach Anspruch 4, wobei die Stege eine Fase (9a) entlang einer Eckkante aufweisen, die der longitudinalen Achse des Schlittens zugewandt sind, wobei die Fase (9a) als Einschlussfläche für das longitudinale elastisches Element wirkt.

6. Flexibles Scharnier für Brillen nach einem der vorstehenden Ansprüche, wobei die Gleitkavität (1A) des Gehäuses (1) als zylindrische Loch geformt ist, wobei vier longitudinale Nuten enthalten sind, in die die parallelen Stege der U-förmigen Strukturen gleitend eingeführt werden können (2e, 2d).

7. Flexibles Scharnier für Brillen nach einem der Ansprüche 1 bis 5, wobei die Gleitkavität des Gehäuses (1') einen Rechteckquerschnitt hat, an dessen Scheitel die parallelen Stege der U-förmigen Struktur (2e, 2d), an zwei gegenüberliegenden Seiten lagernd, gleiten sollen.

8. Flexibles Scharnier für Brillen nach einem der vorstehenden Ansprüche, wobei die Querschnittsfläche von jedem Steg der zwei U-förmigen Strukturen (2e, 2d) kleiner als 0,18 mm² bis 0,22 mm², vorzugsweise kleiner als 0,20 mm², ist.

9. Flexibles Scharnier für Brillen nach einem der vorstehenden Ansprüche, wobei die Haltemittel (5, 10) Seitenvorsprünge umfassen, die in eine Führungsfunktion mit den lateralen Öffnungen (2c) eingreifen sollen.

10. Flexibles Scharnier für Brillen nach Anspruch 9, wobei die Seitenvorsprünge (12a, 12b) gefaste Vorderkanten (13a, 13b) haben, die dazu geeignet sind mit korrespondierenden gefasten Vorderkanten (2c') von den longitudinalen Öffnungen (2c) zu koppeln, wobei die Fasen dazu geeignet sind eine Belastungskomponente von dem elastischen Element (4) zu bestimmen, die orthogonal zur longitudinalen Achse des Schlittens (2) gerichtet ist.

11. Flexibles Scharnier für Brillen nach einem der vorstehenden Ansprüche, wobei weiterhin Innenvorsprünge (15a, 15b), in Entsprechung zu den distalen Endabschnitten des Schlittens (2), vorgesehen sind, die dazu geeignet sind Widerlagerelemente für das distalen Ende des elastischen Mittels (4) zu bilden.

12. Flexible Scharniere für Brillen nach Anspruch 11, wobei die Vorsprünge (15a, 15b) durch Deformation des Materials des Schlittens (2) erzielt werden.

## Revendications

1. Charnière flexible pour lunettes, comprenant un élément femelle (7) articulé avec un élément mâle (1, 1', 2), ce dernier comportant au moins un corps de logement (1), formant une cavité de glissement (1a), et un chariot (2) apte à glisser dans ladite cavité de logement (1a), généralement en forme de U et doté de deux têtes en forme d'oeillets terminales (2b) définissant un axe de charnière, un élément élastique (4) étant, en outre, prévu, agencé longitudinalement et contraint entre une base d'extrémité distale du chariot (2) et des moyens de retenue (5, 10) destinés à être accouplés avec ladite cavité de glissement (1a) et aptes à produire une réaction élastique qui s'oppose au retrait dudit chariot du logement (1, 1'), **caractérisée en ce que**
ledit chariot (2) est façonné suivant deux structures en forme de U (2e, 2d), chacune comprenant deux barres parallèles, reliées dans ladite base d'extrémité distale (2a) du chariot et auxdites deux têtes en forme d'oeillets (2b), lesdites structures en forme de U (2e, 2d) étant combinées sur la même partie principale du corps de chariot de manière à agencer lesdites barres parallèles le long de quatre bords d'angles longitudinaux du chariot et formant ainsi des ouvertures supérieure et inférieure, latérales, allongées longitudinalement (2c)
la longueur desdites ouvertures allongées longitudinales étant au moins égale à la longueur du moyen élastique (4) et la hauteur étant telle qu'elle définit quatre lignes de support longitudinales pour ledit moyen élastique (4) qui sont disposées radialement espacées les unes des autres d'au moins 15°, de préférence d'au moins 40°.

2. Charnière flexible pour lunettes selon la revendication 1, dans laquelle lesdites paires de barres se situent sur des plans tournés l'un par rapport à l'autre, sur l'axe longitudinal du chariot, suivant un angle dans la plage de 50 à 90°.

3. Charnière flexible pour lunettes selon la revendication 1 ou 2, dans laquelle lesdites barres ont un profil à section rectangulaire, leur face interne étant orientée perpendiculairement à l'axe radial sortant de l'axe longitudinal du chariot, cette face interne servant de surface de confinement pour ledit élément élastique longitudinal (4).

4. Charnière flexible pour lunettes selon la revendication 1 ou 2, dans laquelle lesdites barres ont un profil à section rectangulaire, leurs faces homologues ayant la même orientation.

5. Charnière flexible pour lunettes selon la revendication 4, dans laquelle lesdites barres ont un biseau (9a) le long d'un bord d'angle tourné vers l'axe longitudinal du chariot, ledit biseau (9a) servant de surface de confinement pour ledit élément élastique longitudinal (4).

6. Charnière flexible pour lunettes selon l'une quelconque des revendications précédentes, dans laquelle ladite cavité de glissement (1a) du logement (1) a la forme d'un trou cylindrique dans lequel quatre rainures longitudinales sont obtenues, dans lesquelles lesdites barres parallèles des structures en forme de U (2e, 2d) peuvent être introduites par glissement.

7. Charnière flexible pour lunettes selon l'une quelconque des revendications 1 à 5, dans laquelle ladite cavité de glissement du logement (1') a une section rectangulaire, aux sommets de laquelle lesdites barres parallèles des structures en forme de U (2e, 2d) sont destinées à glisser, en portant sur deux faces adjacentes.

8. Charnière flexible pour lunettes selon l'une quelconque des revendications précédentes, dans laquelle la superficie de section transversale de chaque barre des deux structures en forme de U (2e, 2d) est inférieure à 0,18-0,22 mm², de préférence inférieure à 0,20 mm².

9. Charnière flexible pour lunettes selon l'une quelconque des revendications précédentes, dans laquelle lesdits moyens de retenue (5, 10) comprennent des saillies latérales destinées à s'engager avec lesdites ouvertures latérales (2c) en ayant une fonction de guidage.

10. Charnière flexible pour lunettes selon la revendication 9, dans laquelle lesdites saillies latérales (12a, 12b) comportent des bords avant biseautés (13a, 13b) aptes à s'accoupler avec des bords avant biseautés correspondants (2c') desdites ouvertures longitudinales (2c), ledit biseau étant apte à déterminer une composante de contrainte dudit élément élastique (4) dirigée perpendiculairement à l'axe longitudinal dudit chariot (2).

11. Charnière flexible pour lunettes selon l'une quelconque des revendications précédentes, dans laquelle des saillies tournées vers l'intérieur (15a, 15b) sont en outre prévues, en correspondance de la partie terminale distale dudit chariot (2), aptes à constituer des éléments de butée pour l'extrémité distale dudit moyen élastique (4).

12. Charnière flexible pour lunettes selon la revendication 11, dans laquelle lesdites saillies (15a, 15b) sont obtenues par déformation du matériau du chariot (2) .
